# EUROPEAN PATENT APPLICATION

(11) **EP 4 843 949 A1**
(43) Date of publication of application: **25.11.2026**
(21) Application number: 25781987.0
(22) Date of filing: 01.04.2025
(51) Int. Cl.: C01B 32/05, H01M 4/36, H01M 4/38, H01M 4/587

(54) **CARBONACEOUS MATERIAL, METHOD FOR PRODUCING CARBONACEOUS MATERIAL, NEGATIVE ELECTRODE FOR NONAQUEOUS ELECTROLYTE BATTERY, AND NONAQUEOUS ELECTROLYTE BATTERY**

(30) Priority: 02.04.2024 JP 2024059659
(71) Applicant: Kuraray Co., Ltd., Kurashiki-shi, Okayama 710-0801 (JP)
(72) Inventor: NAMBA, Aya, Osaka-shi, Osaka 530-8611 (JP); IWASAKI, Hideharu, Osaka-shi, Osaka 530-8611 (JP); TERASHIMA, Koki, Bizen-shi, Okayama 705-0025 (JP); WATARAI, Yasuhiro, Bizen-shi, Okayama 705-0025 (JP)
(74) Representative: Müller-Boré & Partner Patentanwälte PartG mbB
(86) International application number: PCT/JP2025/013392
(87) International publication number: WO 2025/211375

(57) **Abstract**

The present invention relates to a carbonaceous material having a silicon element content of 5% by mass or more, wherein a value L_{c} representing a distance in a graphite stacking direction and a value Lₐ representing a distance in a graphite plane direction in X-ray diffraction analysis of the carbonaceous material satisfy 1 < L_{c}/Lₐ.

## Description

### TECHNICAL FIELD

The present invention relates to a carbonaceous material, a method for producing a carbonaceous material, a negative electrode for a nonaqueous electrolyte battery, and a nonaqueous electrolyte battery.

### BACKGROUND ART

Nonaqueous electrolyte secondary batteries such as lithium ion secondary batteries have a high energy density and are excellent in output characteristics, and thus are widely used for small portable devices such as mobile phones and laptop computers. In recent years, application to on-vehicle applications such as hybrid vehicles and electric vehicles has also been promoted. As a negative electrode material of a lithium ion secondary battery, non-graphitizable carbon capable of lithium doping (charging) and dedoping (discharging) in an amount exceeding 372 mAh/g, which is a theoretical capacity of graphite, has been developed and used (for example, Patent Documents 1 and 2 and Non-patent Document 1).

However, because nowadays as further improvement in capacity is required, the battery capacity of graphite is insufficient, there has been proposed a material that exhibits a higher battery capacity by allowing a metal having a high lithium storage capability to coexist. While studies have been made on silicon, tin, and the like because of their high storage power of a metal alone, there is a problem that the battery life is short due to expansion accompanying lithiation and shrinkage at the time of release. One solution to this problem is compositing with carbon.

As a method of compositing with a carbon material, a method involving effective utilization of silicon possessed by plants has been studied (Patent Document 2 and Non-patent Document 2).

### PRIOR ART DOCUMENTS

### PATENT DOCUMENTS

Patent Document 1: JP-A-2017-107856
Patent Document 2: JP-A-2017-91822

### NON-PATENT DOCUMENTS

Non-patent Document 1: Journal of The Electrochemical Society, 2016, Vol. 163, No. 7, A1295 - A1299
Non-patent Document 2: Scientific Reports (2022) 12:975

### SUMMARY OF THE INVENTION

### PROBLEMS TO BE SOLVED BY THE INVENTION

In recent years, application of lithium ion secondary batteries to on-vehicle applications and the like has been studied, and further increase in capacity of lithium ion secondary batteries is required. However, conventional carbonaceous materials may be insufficient in discharge capacity. In addition, the utilization efficiency of lithium ions may also be low.

Therefore, an object of the present invention is to provide a carbonaceous material suitable for a negative electrode active material, the carbonaceous material being capable of affording a nonaqueous electrolyte secondary battery having a high charge/discharge capacity and a high charge/discharge efficiency (for example, a lithium ion secondary battery, a sodium ion secondary battery, a lithium sulfur battery, or a lithium air battery), a negative electrode including the carbonaceous material, a nonaqueous electrolyte secondary battery including the negative electrode, and a method for producing the carbonaceous material.

### SOLUTIONS TO THE PROBLEMS

The present inventors have found that the above object can be achieved by the carbonaceous material for a nonaqueous electrolyte secondary battery of the present invention described below.

That is, the present invention includes the following preferred embodiments.
[1] A carbonaceous material having a silicon element content of 5% by mass or more, wherein
   a value L_{c} representing a distance in a graphite stacking direction and a value Lₐ representing a distance in a graphite plane direction in X-ray diffraction analysis of the carbonaceous material satisfy 1 < L_{c}/Lₐ.
[2] The carbonaceous material according to [1], wherein the value Lₐ representing a distance in the graphite plane direction is 4 to 12 Å.
[3] The carbonaceous material according to [1] or [2], wherein the value L_{c} representing a distance in the graphite stacking direction and the value Lₐ representing a distance in the graphite plane direction satisfy 1 < L_{c}/Lₐ < 3.
[4] The carbonaceous material according to any one of [1] to [3], wherein the carbonaceous material has a potassium element content of 0.2% by mass or less.
[5] The carbonaceous material according to any one of [1] to [4], wherein a carbon interplanar spacing d₀₀₂ calculated using a Bragg's equation by wide-angle X-ray diffractometry is 3.75 Å or more.
[6] The carbonaceous material according to any one of [1] to [5], wherein the carbonaceous material is a carbonaceous material derived from a gramineous plant.
[7] A method for producing a carbonaceous material, comprising the steps of:
   (1) heating a carbonized product precursor having a silicon element content of 3% by mass or more under an inert gas atmosphere at 300 to 900°C and then cooling a resultant to 200°C or lower to obtain a carbonized product;
   (2) heating the carbonized product obtained in the step (1) under an inert gas atmosphere at 500 to 1000°C and then cooling a resultant to 200°C or lower to obtain a carbonized product; and
   (3) heating the carbonized product obtained in the step (2) under an inert gas atmosphere at 800 to 1500°C and then cooling a resultant to 200°C or lower to obtain a carbonaceous material.
[8] The production method according to [7], further comprising, between the step (1) and the step (2), a step of pulverizing the carbonized product obtained in the step (1) and a step of washing the carbonized product with an acid.
[9] The production method according to [7] or [8], wherein the carbonaceous material has a silicon element content of 5% by mass or more, and
   the value L_{c} representing a distance in the graphite stacking direction and the value Lₐ representing a distance in the graphite plane direction in X-ray diffraction analysis of the carbonaceous material satisfy 1 < L_{c}/Lₐ.
[10] A negative electrode for a nonaqueous electrolyte battery, comprising the carbonaceous material according to any one of [1] to [5].
[11] A nonaqueous electrolyte battery comprising the negative electrode according to [10].

### EFFECTS OF THE INVENTION

According to the present invention, it is possible to provide a carbonaceous material suitable for a negative electrode active material, the carbonaceous material being capable of affording a nonaqueous electrolyte secondary battery having a high charge/discharge capacity and a high charge/discharge efficiency, a negative electrode comprising the carbonaceous material, a nonaqueous electrolyte secondary battery comprising the negative electrode, and a method for producing the carbonaceous material.

### DETAILED DESCRIPTION

Hereinafter, embodiments of the present invention will be described in detail. The scope of the present invention is not limited to the embodiments described herein, and various modifications can be made without departing from the spirit of the present invention.

The carbonaceous material of the present invention is a carbonaceous material having a silicon element content of 5% by mass or more. If the silicon element content in a carbonaceous material is less than 5% by mass, there are a reduced number of sites that adsorb and desorb lithium ions at the time of charge and discharge, so that a sufficient charge/discharge capacity cannot be obtained. From the viewpoint of increasing the charge/discharge capacity, the silicon element content in the carbonaceous material of the present invention is preferably 6% by mass or more, more preferably 8% by mass or more, still more preferably 10% by mass or more, further preferably 12% by mass or more, and particularly preferably 13% by mass or more. In addition, the silicon element content in the carbonaceous material is preferably 50% by mass or less, more preferably 45% by mass or less, and still more preferably 40% by mass or less. Cases where the silicon atom content in the carbonaceous material is the above upper limit or less are preferable from the viewpoint of preventing distortion of the structure of the carbonaceous material due to expansion of silicon during Li adsorption and maintaining the structure stable. Preventing the distortion of the structure of the carbonaceous material makes it possible to increase the charge/discharge capacity through holding sites that adsorb and desorb lithium ions and holding a conductive path structure. The content of silicon element in the carbonaceous material of the present invention is preferably 5 to 50% by mass, more preferably 6 to 50% by mass, still more preferably 8 to 45% by mass, further preferably 10 to 45% by mass, particularly preferably 12 to 40% by mass, and particularly more preferably 13 to 40% by mass. As the content of silicon element in the carbonaceous material, for example, a range of 5 to 30% by mass or 6 to 25% by mass can also be included as a preferred embodiment. In the present description, the content of silicon element is a content measured by fluorescent X-ray analysis, and may be measured by, for example, the method described in Examples.

The method for adjusting the silicon element content within the above range is not particularly limited as long as a carbonaceous material having a silicon element content within the above range can be obtained, and examples thereof include a method of producing a carbonaceous material using a vegetable raw material containing a large amount of silicon element as described later as a carbon source.

A peak with a half width of 2° or less detected at 20 to 30° (2θ) obtained by X-ray crystal diffraction measurement is a peak derived from crystalline silica, and this is a electronically nonconductive, and does not receive insertion of Li ions, and thus not only is a resistive component but also is an electrochemically inactive component. When crystalline silica is mixed in the carbon material in such an amount that this peak is detected, the number of sites for lithiation decreases in the carbon material, and the charge/discharge capacity decreases. Therefore, it is preferable that a peak with a half width of 2° or less obtained by X-ray crystal diffraction measurement is not detected at 20 to 30° (2θ). To prevent the peak from being detected, it is preferable not to use a carbon precursor containing crystalline silica as a raw material in producing a carbonaceous material.

In the carbonaceous material of the present invention, the value L_{c} representing a distance in the graphite stacking direction and the value Lₐ representing a distance in the graphite plane direction in the X-ray diffraction analysis of the carbonaceous material satisfy 1 < L_{c}/Lₐ. Here, when L_{c}/Lₐ, which is the ratio of the value L_{c} representing a distance in the graphite stacking direction to the value Lₐ representing a distance in the graphite plane direction, is larger than 1, in a carbonaceous material in which crystals are randomly mixed, due to the fact that the crystal growth relationship is as described above, the crystal density of particles increases, and as a result, the electrode density tends to increase, and thus the volume capacity as an electrode increases. In addition, it is considered that the charge/discharge efficiency can be increased because fine amorphous carbon edge faces (total amount of edge faces) decrease. L_{c}/Lₐ is preferably less than 3, more preferably 1.1 to 2.5, still more preferably 1.2 to 2.4, and further preferably 1.3 to 2.3 from the viewpoint of not excessively suppressing the growth of a crystal plane in the Lₐ direction.

In the carbonaceous material of the present invention, the value L_{c} representing a distance in the graphite stacking direction in the X-ray diffraction analysis of the carbonaceous material is preferably 6 to 15 Å, more preferably 7 to 14 Å, still more preferably 8 to 13 Å, and further preferably 9 to 12 Å from the viewpoint of promoting the growth of the crystal plane in the L_{c} direction and increasing the carbon density.

In the carbonaceous material of the present invention, the value Lₐ representing a distance in the graphite plane direction in the X-ray diffraction analysis of the carbonaceous material is preferably 4 to 12 Å, more preferably 4.5 to 11 Å, still more preferably 5 to 10 Å, and further preferably 5.5 to 9 Å, because if the growth of the crystal plane in the Lₐ direction is excessively suppressed, there is a concern about a decrease in efficiency at carbon edge sites.

The potassium element content in the carbonaceous material of the present invention is preferably 0.2% by mass or less, more preferably 0.15% by mass or less, and still more preferably 0.1% by mass or less from the viewpoint of increasing the charge/discharge capacity and the charge/discharge efficiency. When the content of the potassium element contained in the carbonaceous material is the above upper limit value or less, the dedoping capacity tends to increase and the non-dedoping capacity tends to decrease in a nonaqueous electrolyte secondary battery including the carbonaceous material. Furthermore, when the content of the potassium element contained in the carbonaceous material is the above upper limit value or less, the occurrence of short circuit due to elution and redeposition of these metal elements in the electrolytic solution is suppressed, so that the safety of the nonaqueous electrolyte secondary battery can be secured. It is particularly preferable that the carbonaceous material contains substantially no potassium element. The content of the potassium element contained in the carbonaceous material is usually 0% by mass or more. The potassium element content is measured by fluorescent X-ray analysis. For example, the potassium element content can be measured by the method described in Examples.

In the carbonaceous material of the present invention, the carbon interplanar spacing d₀₀₂ calculated using the Bragg's equation by wide-angle X-ray diffractometry is preferably 3.75 Å or more, more preferably 3.78 Å or more, still more preferably 3.79 Å or more, and further preferably 3.80 Å or more, and is preferably 4.10 Å or less, and more preferably 4.00 Å or less. When the carbon interplanar spacing d₀₀₂ is equal to or more than the lower limit value and is less than or equal to the upper limit value, it is easy to obtain a carbonaceous material that affords a battery superior in battery capacity retention ratio at a low temperature. When the carbon interplanar spacing d₀₀₂ is adjusted within the above range, not only the battery capacity is increased due to containing silicon element, but also the battery capacity derived from the carbon skeleton is increased. In addition, since the carbonaceous material having the carbon interplanar spacing within the above range is superior in characteristics at a low temperature, it is possible to alleviate the phenomenon that the Li insertion-elimination reaction reported for silicon-containing carbonaceous materials becomes relatively sensitive to temperature. The carbon interplanar spacing d₀₀₂ can be adjusted to fall within the above range, for example, by adjusting heating temperature (for example, the temperature in the first carbonization step or the temperature in the second carbonization step). In addition, since the carbonaceous material having the carbon interplanar spacing described above is superior in characteristics at a low temperature, the temperature sensitivity of the Li insertion-elimination reaction can be alleviated. The carbon interplanar spacing d₀₀₂ can be determined by X-ray diffraction analysis, and can be measured by, for example, the method described in Examples.

The specific surface area of the carbonaceous material of the present invention by the nitrogen adsorption BET method is preferably 300 m²/g or less, more preferably 200 m²/g or less, still more preferably 150 m²/g or less, further preferably 100 m²/g or less, particularly preferably 80 m²/g or less, particularly more preferably 60 m²/g or less, and most preferably 40 m²/g or less. When the specific surface area is the above upper limit or less, the hygroscopicity of the carbonaceous material is easily reduced, and the amount of moisture present in the carbonaceous material is easily reduced. As a result, the hydrolysis of an electrolytic solution caused by moisture and the electrolysis of water are suppressed, and generation of an acid and a gas associated therewith is easily suppressed. When the specific surface area is less than or equal to the upper limit, the contact area between air and the carbonaceous material is easily reduced, and oxidation of the carbonaceous material itself is easily suppressed. The lower limit of the specific surface area of the carbonaceous material measured by the nitrogen adsorption BET method is not particularly limited, but is preferably 5 m²/g or more, more preferably 9 m²/g or more, and still more preferably 9.5 m²/g or more from the viewpoint of increasing the contact area with the electrolytic solution and easily lowering the resistance of the battery. In the present description, the specific surface area by the BET method means a specific surface area determined by a nitrogen adsorption BET multipoint method. Specifically, the specific surface area can be measured using a method described later.

The method for adjusting the specific surface area by the BET method to the above range is not limited at all, but for example, in the method for producing a carbonaceous material to be described later, when the temperature of the step of obtaining a carbon precursor and/or the step of obtaining a carbonized product is lowered or when the heating time is shortened, shrinkage of the structure due to heat is suppressed, so that the BET specific surface area of the finally obtained carbonaceous material tends to increase. Therefore, to obtain a carbonaceous material having a BET specific surface area in a desired range, it is effective to adjust the calcination temperature and the calcination time.

The average particle size D₅₀ of the carbonaceous material of the present invention is preferably 30 µm or less, more preferably 25 µm or less, still more preferably 20 µm or less, further preferably 18 µm or less, particularly preferably 16 µm or less, and most preferably 15 µm or less. When the average particle size is equal to or less than the above upper limit, not only the coatability at the time of electrode preparation is improved, but also the diffusion free path of lithium ions in the particles of the carbonaceous material is reduced, so that rapid charge and discharge can be easily obtained. Furthermore, in a lithium ion secondary battery, it is important to increase the electrode area in order to improve input/output characteristics, and for this purpose, it is necessary to reduce the coating thickness of an active material on a current collector plate at the time of electrode preparation. When the average particle size of the carbonaceous material to serve as an active material is equal to or less than the above upper limit, it is easy to reduce the coating thickness at the time of electrode preparation. The average particle size D₅₀ of the carbonaceous material of the present invention is preferably 2 µm or more, more preferably 3 µm or more, still more preferably 4 µm or more, and further preferably 5 µm or more. When the average particle size D₅₀ is equal to or more than the above lower limit, it is easy to suppress an increase in the specific surface area and an increase in the reactivity with an electrolytic solution due to a fine powder in the carbonaceous material, and also to suppress an increase in the irreversible capacity. In addition, when a negative electrode is produced using a carbonaceous material, it is easy to secure voids formed in the carbonaceous material, the movement of lithium ions in an electrolytic solution is hardly inhibited, and it is easy to reduce the resistance of a nonaqueous electrolyte secondary battery. The average particle size D₅₀ is a particle size at which the cumulative volume is 50%, and can be determined, for example, by measuring a particle size distribution by a laser scattering method using a particle size and particle size distribution analyzer ("Microtrac MT3300 EXII" manufactured by MicrotracBEL Corp.).

The method for producing a carbonaceous material of the present invention is not particularly limited as long as a carbonaceous material having the characteristics described above can be obtained. From the viewpoint of increasing the silicon element content, it is preferable to produce a carbonaceous material using a carbonized product precursor containing a relatively large amount of silicon.

Examples of the carbonized product precursor containing a relatively large amount of silicon include vegetable raw materials, and specific examples thereof include bamboo, rice straw, wheat straw, barley straw, rice straw, buckwheat straw, soybean straw, bran, rice hull, wheat hull, buckwheat hull, corn culm, sugar cane top, peanut hull, Japanese red cedar sawdust, Japanese larch bark, and fallen ginkgo leaves. From the viewpoint of increasing the silicon element content in a carbonaceous material as a final product, it is preferable to use bamboo, rice straw, wheat straw, barley straw, rice straw, buckwheat straw, bran, rice hull, wheat hull, buckwheat hull, or peanut hull as a carbonized product precursor. The carbonaceous material is preferably a carbonaceous material derived from a gramineous plant, and more preferably a carbonaceous material derived from rice hulls in consideration of the generation scale, heapability, availability, and stability against decay or the like of vegetable raw materials. The fact that a carbonaceous material is derived from a gramineous plant means that the carbon source of the carbonaceous material is derived from a gramineous plant.

The method for producing the carbonaceous material of the present invention is not particularly limited as long as the carbonaceous material of the present invention having the above characteristics can be obtained, but for example, the carbonaceous material can be produced using a method for producing a carbonaceous material including at least the steps to be described later.

The present invention also provides a method for producing a carbonaceous material suitable for a negative electrode active material or a conductive material of a nonaqueous electrolyte secondary battery having a high charge/discharge capacity and a high charge/discharge efficiency (for example, a lithium ion secondary battery, a sodium ion battery, a lithium sulfur battery, or a lithium air battery).

In one embodiment of the present invention, the method for producing a carbonaceous material of the present invention comprises the following steps of:
(1) heating a carbonized product precursor having a silicon element content of 3% by mass or more under an inert gas atmosphere at 300 to 900°C and then cooling a resultant to 200°C or lower to obtain a carbonized product;
(2) heating the carbonized product obtained in the step (1) under an inert gas atmosphere at 500 to 1000°C and then cooling a resultant to 200°C or lower to obtain a carbonized product; and
(3) heating the carbonized product obtained in the step (2) under an inert gas atmosphere at 800 to 1500°C and then cooling a resultant to 200°C or lower to obtain a carbonaceous material.

The present invention also provides the above-described method for producing a carbonaceous material. The above production method is not particularly limited as long as it comprises the steps (1) to (3). The method may comprise only (1) to (3), or may comprise further steps before and after each of those steps. In addition, the carbonized product to be subjected to the heating treatment in the step (2) may be the carbonized product obtained in the step (1) as it is, or may be a material resulting from the carbonized product via a further treatment. The carbonized product to be subjected to the heating treatment in the step (3) may be the carbonized product obtained in the step (2) as it is, or may be a material resulting from the carbonized product via a further treatment.

First, the method for producing a carbonaceous material of the present invention comprising steps (1), (2), and (3) will be described.

The step (1) is a step of heating a raw material being a carbonized product precursor having a silicon element content of 3% by mass or more under an inert gas atmosphere at 300 to 900°C and then cooling the resultant to 200°C or lower to obtain a carbonized product. Examples of the carbonized product precursor having a silicon element content of 3% by mass or more include the carbonized product precursor containing a relatively large amount of silicon described above, and a carbonized product precursor obtained by pre-calcining that carbonized product precursor. The inert gas is not particularly limited as long as it is a gas containing no oxygen, and examples thereof include nitrogen gas, argon gas, helium gas, carbon dioxide gas, and water vapor. The inert gas may be a single kind of gas among those listed above, or may be a mixed gas of two or more kinds of gases among those listed above. In the present invention, the inert gas refers to a gas that does not oxidatively erode carbon under a heat treatment temperature. The inert gas is preferably nitrogen gas, superheated water vapor, or carbon dioxide gas from the viewpoint of easily reducing the production cost, and is preferably nitrogen gas from the viewpoint of operability. The step (1) is preferably conducted under supply of an inert gas. When the step (1) is conducted under supply of an inert gas, the supply amount of the inert gas is preferably 0.01 to 20 L/min, more preferably 0.02 to 15 L/min, and still more preferably 0.03 to 10 L/min based on 10 g of the carbonized product precursor from the viewpoint of removability of volatile components.

The heating temperature in the step (1) is 300 to 900°C, preferably 310 to 850°C, more preferably 320 to 800°C, and still more preferably 330 to 750°C. The heating temperature may be a constant temperature or may be set to a temperature varying within the above range. The heat treatment time is preferably 0.2 to 8 hours, more preferably 0.5 to 4 hours, and still more preferably 0.5 to 2 hours. It is considered that by the heat treatment at the above-described heating temperature in the step (1), the physically adsorbed water contained in the carbonized product precursor is dried, and a dehydration reaction at a molecular level in the carbonized product precursor occurs, so that carbonization proceeds. It is considered that by conducting this heat treatment under an inert gas atmosphere, preferably under supply of an inert gas, a carbonized product maintaining a fine structure can be obtained without causing a structural loss due to oxidation of carbon when water is removed from the carbonized product precursor by drying and dehydration. It is considered that under the heating conditions described above, water is efficiently and sufficiently removed from the raw material of the carbon precursor by drying and dehydration, and a carbonaceous material having the characteristics described above is easily finally obtained. After the heating treatment, the resultant is cooled to 200°C or lower to afford a carbonized product. The cooling temperature is merely required to be 200°C or lower, but it is preferable to obtain the carbonized product by cooling that resultant to preferably 150°C or lower, more preferably 100°C or lower, still more preferably 50°C or lower, and further preferably room temperature (25°C) or lower.

The step (2) is a step of heating the carbonized product obtained in the step (1) under an inert gas atmosphere at 500 to 1000°C and then cooling the resultant to 200°C or lower to obtain a carbonized product. Examples of the inert gas include argon gas, helium gas, and nitrogen gas, and nitrogen gas is preferable. The step (2) is preferably conducted under supply of an inert gas. When the step (2) is conducted under supply of an inert gas, the supply amount of the inert gas is preferably 0.01 to 20 L/min, more preferably 0.02 to 15 L/min, and still more preferably 0.03 to 10 L/min based on 10 g of the carbonized product from the viewpoint of removability of volatile components.

The heating temperature in the step (2) is 500 to 1000°C, preferably 600 to 1000°C, more preferably 700 to 950°C, and still more preferably 800 to 950°C. The heating temperature may be a constant temperature or may be set to a temperature varying within the above range. The heat treatment time is preferably 0.2 to 8 hours, more preferably 0.3 to 4 hours, and still more preferably 0.4 to 3 hours. After the heating treatment, the resultant is cooled to 200°C or lower to afford a carbonized product. The cooling temperature is merely required to be 200°C or lower, but it is preferable to obtain the carbonized product by cooling that resultant to preferably 150°C or lower, more preferably 100°C or lower, still more preferably 50°C or lower, and further preferably room temperature (25°C) or lower.

The subsequent step (3) is a step of heating the carbonized product obtained in the step (2) under an inert gas atmosphere at 800 to 1500°C and then cooling the resultant to 200°C to obtain a carbonaceous material. Examples of the inert gas include argon gas, helium gas, and nitrogen gas, and nitrogen gas is preferable. The step (3) is preferably conducted under supply of an inert gas. When the step (3) is conducted under supply of an inert gas, the supply amount of the inert gas is preferably 0.01 to 20 L/min, more preferably 0.02 to 15 L/min, and still more preferably 0.03 to 10 L/min based on 10 g of the carbonized product from the viewpoint of setting L_{c} and Lₐ within a prescribed range.

The heating temperature in the step (3) is 800 to 1500°C, preferably 850 to 1450°C, more preferably 900 to 1400°C, and still more preferably 900 to 1350°C. When the heating temperature is within the above range, it is easy to finally obtain a carbonaceous material having the characteristics described above. The heating temperature may be a constant temperature or may be set to a temperature varying within the above range. Examples of the inert gas include argon gas, helium gas, and nitrogen gas, and nitrogen gas is preferable. The heat treatment time is preferably 0.2 to 8 hours, more preferably 0.3 to 4 hours, and still more preferably 0.4 to 3 hours. After the heating treatment, the resultant is cooled to 200°C or lower, whereby a carbonaceous material can be obtained. The cooling temperature is merely required to be 200°C or lower, but it is preferable to obtain the carbonaceous material by cooling that resultant to preferably 150°C or lower, more preferably 100°C or lower, still more preferably 50°C or lower, and further preferably room temperature (25°C) or lower.

It is considered that owing to the fact that the production method of the present invention comprises the steps (1) to (3), the decomposition products volatilized during the respective steps can be sufficiently removed, and the generation of an amorphous carbon portion due to the decomposition products is suppressed, and Li ions are prevented from being deactivated at the carbon portion, so that the effect of the present invention is achieved. For example, since the step (2) is a step of removing volatiles at a high temperature, the growth of the crystal plane in the Lₐ direction (graphite plane direction) is suppressed, the number of carbon edge sites increases, and there is a concern about a decrease in Li ion efficiency due to deactivation of Li ions at the edge sites. On the other hand, by conducting the steps (1) to (3) separately, the volatilized decomposition products can be sufficiently removed, and the amount of fine amorphous carbon formed when the decomposition products remain (total amount of edge faces) can be reduced. Li ions may be deactivated at the carbon edge sites or the amorphous edge faces, and as a result, the charge/discharge efficiency is reduced, but it is considered that the suppression of deactivation due to the reduction of the amorphous edge face exceeds the deactivation that can occur at crystal edge sites, and the charge/discharge efficiency can be improved. In a nonaqueous electrolyte secondary battery such as a Li ion battery, when this efficiency decreases, Li deficiency occurs on the positive electrode side, and the battery operation is often unstable, which is unfavorable. Therefore, not only a high battery capacity but also a high initial efficiency of Li ions contributes to battery performance.

In addition, in the case of a crystal that is large in the Lₐ direction and small in the L_{c} direction (sometimes referred to as a flat plate shape), aggregation is prone to occur, and as a result, voids may be generated, leading to a decrease in carbon density. However, in the case of the carbonaceous material of the present invention satisfying 1< L_{c}/Lₐ, such aggregation can be suppressed, and the carbon density can be increased.

Furthermore, when the heating treatment in the step (3) is continuously conducted without cooling the carbonized product to 200°C or lower after the heating treatment in the step (2), the material in the structure construction process may be coated with volatile substances such as the decomposition product generated in the step (2), and the construction of the crystal structure may be inhibited. Further, the carbonized product obtained in the step (3) may be coated, and elimination of the volatiles generated in the step (3) may be suppressed. Further, when a decomposable organic substance is added in the step (3), it may be difficult to control coating with this substance. On the other hand, according to the production method of the present invention, safety during industrial production can be enhanced because the reaction between hydrogen generated in the step (3) and the volatiles generated in the step (2) can be suppressed. In particular, in the step (2), when the carbonized product is obtained by passing a sufficient amount of inert gas and cooling the resultant to 200°C or lower, the volatiles can be sufficiently removed.

The method for producing a carbonaceous material of the present invention may further comprise a step of adding at least one volatile organic substance to the carbonized product obtained in the step (2) before subjecting the carbonized product to the step (3) of calcining the carbonized product at a high temperature. This step allows organic substances volatilized during the calcination of the carbonized product at a high temperature to adhere to the surface of the carbonized product, so that it becomes easy to produce a carbonaceous material having a lower specific surface area. Such a carbonaceous material can reduce hygroscopicity and suppress the hydrolysis of an electrolytic solution caused by moisture and the electrolysis of water while maintaining a high charge/discharge capacity and a high charge/discharge efficiency.

The volatile organic substance is an organic compound that is hardly carbonized (for example, preferably 80% or more, more preferably 90% or more of the substance is not carbonized) and volatilizes (undergoes gasification or thermal decomposition to become a gas) when heat-treated, for example, at a temperature of 500°C or higher in an inert gas atmosphere such as nitrogen. Examples of the volatile organic substance include, but are not limited to, thermoplastic resins and low molecular weight organic compounds. Examples of the thermoplastic resin include polystyrene, polyethylene, polypropylene, poly(meth)acrylic acid, and poly(meth)acrylic acid ester. In the present description, (meth)acryl is a collective term for methacryl and acryl. Examples of the low molecular weight organic compound include toluene, xylene, mesitylene, styrene, naphthalene, phenanthrene, anthracene, and pyrene. Polystyrene, polyethylene, and polypropylene are preferable as the thermoplastic resin because the thermoplastic resin is preferred to vaporize at the calcination temperature, and not to oxidatively activate the surface of the carbon precursor when thermally decomposed. As the low molecular weight organic compound, compounds having low volatility at room temperature (for example, 20°C) are further preferable from the viewpoint of safety, and naphthalene, phenanthrene, anthracene, pyrene, and so on are particularly preferable.

The addition amount of the volatile organic substance is not particularly limited, but is usually in the range of 1 to 30 parts by mass based on 100 parts by mass of the carbonized product obtained in the step (2). As to the step of adding the volatile organic substance, the step (3) may be conducted immediately after the addition, or the step (3) may be conducted after a heat treatment of the inert gas at a temperature lower than that at which the step (3) is conducted.

The production method of the present invention preferably further comprises a step of removing a metal component and the like that can be contained in the carbonized product precursor (for example, a plant-derived carbonized product precursor) having a silicon element content of 3% by mass or more. Examples of the metal component and the like to be removed include potassium element, sodium element, and calcium element. The step of removing the metal component and the like may be conducted either before or after the step (1). As a method of removing the metal component and the like, any one of a method of washing with an acid, a method of washing with an alkali, and a method of conducting both treatments may be used. However, the method of washing with an acid is preferable from the viewpoint of the difficulty of the treatment of the metal-removed wastewater by the solubilization of the organic substance constituting the carbonized product precursor in water without destroying the structure of the carbonized product precursor.

As the acid to be used, any of mineral acids such as hydrochloric acid, sulfuric acid, and nitric acid, and water-soluble organic acids such as formic acid, acetic acid, butyric acid, and citric acid may be used. These may be used alone or in combination. Use of hydrochloric acid is preferable in consideration of removal efficiency, residual property, and the like of metal. The concentration of the acidic water to be used is also not particularly limited, but for example, when hydrochloric acid is used, it is preferable to use acidic water having a concentration in a range of preferably 0.01 N to 2 N, more preferably 0.05 N to 1.8 N, and still more preferably 0.1 N to 1.5 N.

The temperature of the acid washing is also not particularly limited, and it is needless to say that the temperature is complementary to the washing time, but the acid washing is usually conducted in the range of 0.5 hours to 6 hours, more preferably in the range of 1 hour to 5 hours in the range of normal temperature to 80°C. This operation may be conducted once as long as the amount of metal can be reduced to a target amount, or may be conducted multiple times along with repetitive liquid removal.

After the acid washing, removal of the acid may be conducted by washing the carbonized product with ion-exchanged water or the like.

In the present invention, before the step (2), it is preferable to pulverize the carbonized product obtained in the step (1) to adjust the particle size of the carbonized product to a final target particle size. By conducting the pulverization in advance, volatiles remaining and formed at the time of carbonization in the step (1) can be effectively removed.

The average particle size D₅₀ of the carbonized product subjected to the step (2) is preferably 2 µm or more, more preferably 3 µm or more, still more preferably 4 µm or more, and further preferably 5 µm or more. The average particle size D₅₀ is preferably 30 µm or less, more preferably 25 µm or less, still more preferably 22 µm or less, and particularly preferably 20 µm or less. When the average particle size D₅₀ in the carbonized product is within the above range, the average particle size D₅₀ in the carbonaceous material produced from the carbonized product is easily adjusted to the range described above with respect to the carbonaceous material, and the charge/discharge capacity and the charge/discharge efficiency in the nonaqueous electrolyte secondary battery are easily enhanced. The average particle size D₅₀ of the carbonized product can be measured in the same manner as the method described for the carbonaceous material.

In one preferred embodiment, the production method of the present invention further comprises, between the step (1) and the step (2), a step of pulverizing the carbonized product obtained in the step (1) and a step of washing the carbonized product with an acid. The order of the acid washing step and the pulverization step is not particularly limited, and the acid washing step may be conducted after the pulverization step is conducted, or the pulverization step may be conducted after the acid washing step is conducted, but it is more preferable to conduct the acid washing step after the pulverization step is conducted. In addition, this embodiment is not particularly limited as long as each of the pulverization step and the washing step is included at least once between the step (1) and the step (2), and each of the pulverization step and the washing step may be conducted once or twice or more between the step (1) and the step (2). In addition, the pulverization step and/or the washing step may be conducted in a step other than between the step (1) and the step (2).

The method for producing the carbonaceous material of the present invention is not limited to the production method of the present invention described above, and the carbonaceous material of the present invention may be a carbonaceous material produced by any production method as long as the carbonaceous material satisfies the characteristics described above. In the production method of the present invention, with the intention of conducting the final heating in the step (3) after sufficiently removing the volatile components generated in the step (1) and the step (2), especially in the step (2), the carbonized product or the carbon precursor is cooled to 200°C or lower in each of the step (1) to the step (3), and then the next step is conducted. However, for example, in the case of conducting the step of sufficiently removing the volatile components generated by a heating treatment by passing a large amount of inert gas particularly in the step (2), it is considered that the heating treatments in the steps (2) and (3) can be continuously conducted without cooling to 200°C or lower.

The carbonaceous material of the present invention or the carbonaceous material obtained by the production method of the present invention can be suitably used as a negative electrode active material of a nonaqueous electrolyte secondary battery. The present invention also provides a negative electrode for a nonaqueous electrolyte secondary battery comprising the carbonaceous material of the present invention, and a nonaqueous electrolyte secondary battery comprising the negative electrode.

Hereinafter, a method for producing the negative electrode for a nonaqueous electrolyte secondary battery of the present invention will be specifically described. The negative electrode of the present invention can be produced, for example, by adding a binding agent (binder) to the carbonaceous material of the present invention, adding an appropriate amount of a solvent thereto, and then kneading them to prepare an electrode mixture, applying the electrode mixture obtained to a current collector plate made of a metal plate or the like, drying the electrode mixture, and then pressure-molding the electrode mixture.

The use of the carbonaceous material of the present invention makes it possible to produce an electrode (negative electrode) having a high conductivity without adding a conductive aid. For the purpose of imparting a higher conductivity, a conductive aid can be added during the preparation of the electrode mixture, as necessary. As the conductive aid, conductive carbon black, vapor grown carbon fibers (VGCF), nanotubes, and the like can be used. The addition amount of the conductive aid varies depending on the type of the conductive aid to be used, but when the addition amount is excessively small, expected conductivity may not be obtained, and when the addition amount is excessively large, dispersion in the electrode mixture may be deteriorated. From such a viewpoint, the proportion of the conductive aid to be added is preferably 0.5 to 10% by mass (here, the amount of the active material (carbonaceous material) + the amount of the binder + the amount of the conductive aid = 100% by mass), still more preferably 0.5 to 7% by mass, and particularly preferably 0.5 to 5% by mass. The binding agent is not particularly limited as long as it does not react with the electrolytic solution like PVDF (polyvinylidene fluoride), polytetrafluoroethylene, and a mixture of SBR (styrene-butadiene rubber) and CMC (carboxymethyl cellulose). Among them, a mixture of SBR and CMC is preferable because SBR and CMC attached to the surface of the active material hardly inhibit lithium ion transfer, and good input/output characteristics can be obtained. In order to dissolve an aqueous emulsion of SBR or the like, or CMC to form a slurry, a polar solvent such as water is preferably used, but a solvent-based emulsion of PVDF or the like can also be dissolved in N-methylpyrrolidone or the like for use. When the addition amount of the binding agent is excessively large, an increased resistance of the resulting electrode is attained, so that an increased internal resistance of the battery is attained and the battery characteristics may be deteriorated. When the addition amount of the binding agent is excessively small, the bonding among the particles of the negative electrode material and with the current collecting material may be insufficient. The preferred addition amount of the binding agent varies depending on the type of the binder to be used, but for example, in the case of a binder for which water is used as a solvent, a mixture of a plurality of binders such as a mixture of SBR and CMC is often used, and the total amount of all binders to be used is preferably 0.5 to 5% by mass, and more preferably 1 to 4% by mass. On the other hand, the preferred addition amount of the PVDF-based binder is preferably 3 to 13% by mass, and more preferably 3 to 10% by mass. The amount of the carbonaceous material of the present invention in the electrode mixture is preferably 80% by mass or more, and more preferably 90% by mass or more. The amount of the carbonaceous material of the present invention in the electrode mixture is preferably 100% by mass or less, and more preferably 97% by mass or less.

An electrode active material layer is basically formed on both sides of the current collector plate, but may be formed on one side, as necessary. A thicker electrode active material layer is preferable for an increased capacity because the current collector plate, a separator, or the like can be reduced. However, a wider electrode area opposed to a counter electrode is more advantageous for improving input/output characteristics, and therefore, when the electrode active material layer is excessively thick, the input/output characteristics may deteriorate. The thickness (per side) of the active material layer is preferably 10 to 80 µm, more preferably 20 to 75 µm, and still more preferably 30 to 75 µm from the viewpoint of output at the time of battery discharge.

The nonaqueous electrolyte secondary battery of the present invention comprises the negative electrode for a nonaqueous electrolyte secondary battery of the present invention. The nonaqueous electrolyte secondary battery comprising the negative electrode for a nonaqueous electrolyte secondary battery comprising the carbonaceous material of the present invention has a high charge/discharge capacity and a high charge/discharge efficiency.

When a negative electrode for a nonaqueous electrolyte secondary battery is formed using the carbonaceous material of the present invention, other materials constituting the battery such as a positive electrode material, a separator, and an electrolytic solution are not particularly limited, and various materials conventionally used or proposed as a nonaqueous solvent secondary battery can be used.

For example, the positive electrode material is preferably composite metal chalcogen compounds, such as layered oxide-type (represented by LiMO₂, where M represents a metal: such as LiCoO₂, LiNiO₂, LiMnO₂, or represented by LiNiₓCo_{y}Mo_{z}O₂ (where, x, y, and z represent composition ratios)); olivine-type (represented by LiMPO₄, where M represents a metal: such as LiFePO₄); and spinel-type (represented by LiM₂O₄, where M represents a metal: such as LiMn₂O₄). These chalcogen compounds may be mixed for use, as necessary. These positive electrode materials are molded together with an appropriate binder and a carbon material for imparting conductivity to the electrode, and a layer is formed on a conductive current collecting material to form a positive electrode.

The nonaqueous solvent type electrolytic solution to be used in combination with the positive electrode and the negative electrode is generally formed by dissolving an electrolyte in a nonaqueous solvent. As the nonaqueous solvent, for example, an organic solvent such as propylene carbonate, ethylene carbonate, dimethyl carbonate, diethyl carbonate, dimethoxyethane, diethoxyethane, γ-butyrolactone, tetrahydrofuran, 2-methyltetrahydrofuran, sulfolane, or 1,3-dioxolane can be used singly, or two or more of them may be used in combination. In addition, as the electrolyte, LiClO₄, LiPF₆, LiBF₄, LiCF₃SO₃, LiAsF₆, LiCl, LiBr, LiB (C₆H₅)₄, LiN(SO₃CF₃)₂, or the like is used.

The nonaqueous electrolyte secondary battery is generally formed by making a positive electrode and a negative electrode formed as described above face each other with a liquid-permeable separator interposed therebetween, as necessary, and immersing them in an electrolytic solution. As such a separator, a permeable or liquid-permeable separator made of a nonwoven fabric or other porous material usually used for secondary batteries can be used. Alternatively, instead of the separator or together with the separator, a solid electrolyte composed of a polymer gel impregnated with an electrolytic solution can also be used.

The carbonaceous material of the present invention is suitable as, for example, a carbonaceous material for a battery (typically, a nonaqueous electrolyte secondary battery for driving a vehicle) mounted on a vehicle such as an automobile. In the present invention, the vehicle encompasses one generally known as an electric vehicle, a hybrid vehicle with a fuel cell and an internal combustion engine, etc. without any particular limitation; however, the vehicle comprises at least a power source device provided with the battery described above, an electric drive mechanism driven by power supply from the power source device, and a control device controlling this mechanism. The vehicle may further comprise a mechanism provided with a dynamic brake and a regenerative brake and converting energy derived from braking into electricity to charge the nonaqueous electrolyte secondary battery.

In a preferred embodiment, the carbonaceous material of the present invention has low resistance, and therefore, it can also be used, for example, as an additive for imparting conductivity to an electrode material of a battery. The type of the battery is not particularly limited, but a nonaqueous electrolyte secondary battery and a lead-acid battery are suitable. By adding the carbonaceous material of the present invention to the electrode material of such a battery, a conductive network can be formed, and conductivity is enhanced, so that an irreversible reaction can be suppressed, and therefore the life of the battery can be prolonged.

### Examples

Hereinafter, the present invention is described specifically by way of Examples, but these do not limit the scope of the present invention. Hereinafter, methods for measuring physical property values of carbonaceous materials will be described, and the physical property values described in the present description including Examples are based on the values obtained by the following methods.

### (Elemental Analysis)

### (Contents of Silicon Element and Potassium Element)

The silicon element content and the potassium element content were measured by, for example, the following method. A carbon sample containing a prescribed silicon element and a prescribed potassium element was prepared in advance, and calibration curves regarding the relationship between the intensity of the silicon Kα ray and the content of the silicon element and the relationship between the intensity of the potassium element Kα ray and the content of the potassium element were prepared using a fluorescent X-ray analyzer. Next, the intensities of the silicon Kα ray and the potassium Kα ray in the fluorescent X-ray analysis of the sample were measured, and the silicon element content and the potassium element content were determined from the calibration curves prepared previously. Fluorescent X-ray analysis was conducted using "ZSX Primus II" manufactured by Rigaku Corporation under the following conditions. 5.0 g of a sample to be measured was weighed on a nylon filter sheet, the measurement surface was wrapped with a polypropylene film, the sample was placed on a sample holder, and the measurement was conducted. The X-ray source was set to 30 kV and 100 mA at the time of silicon element measurement and 40 kV and 75 mA at the time of potassium element measurement, and the measurement was conducted.

### (Specific Surface Area by Nitrogen Adsorption BET Method)

An approximate formula derived from the BET equation is given below. [Math 1] $\frac{p / {p}_{0}}{v \left(1-p/{p}_{0}\right)} = \frac{1}{{v}_{m} c} + \frac{\left(c-1\right) p}{{v}_{m} c {p}_{0}}$

Using the above approximate formula, vₘ was determined by substituting the adsorption amount (v) actually measured at a relative pressure (p/p₀) by a multipoint method based on nitrogen adsorption at a liquid nitrogen temperature, and the specific surface area (SSA: unit: m²g⁻¹) of the sample was calculated by the following formula. [Math 2] $Specific surface area = \left(\frac{{ν}_{m} Na}{22400}\right) \times {10}^{- 18}$

In the above formulas, vₘ is the adsorption volume (cm³/g) required to form a monomolecular layer on the sample surface; v is the measured adsorption volume (cm³/g); p₀ is the saturated vapor pressure; p is the absolute pressure; c is a constant (reflecting heat of adsorption); N is the Avogadro's number 6.022 × 10²³; and a (nm²) is the area occupied by an adsorbate molecule on the sample surface (molecular occupied cross section).

Specifically, the adsorption volume of nitrogen adsorbed on a carbonaceous material at liquid-nitrogen temperatures was measured using "BELL Sorb Mini" manufactured by BEL JAPAN, INC. The measurement sample was filled in a sample tube, and the sample tube was once depressurized with the sample tube cooled to -196° C. Then, the measurement sample was allowed to adsorb nitrogen (purity: 99.999%) at a desired relative pressure. The amount of nitrogen adsorbed on the sample when the pressure reached the equilibrium pressure at each desired relative pressure was defined as the adsorbed gas volume v.

### (Average Particle Size D₅₀ by Laser Scattering Method)

The average particle size (particle size distribution) of a carbonaceous material or a carbonized product was measured by the following method. A sample was charged into an aqueous solution containing 5% by mass of a surfactant ("ToritonX100" manufactured by Wako Pure Chemical Industries, Ltd.), and treated with an ultrasonic cleaner for 10 minutes or more to be dispersed in the aqueous solution. The particle size distribution was measured using this dispersion. The particle size distribution measurement was conducted using a particle size and particle size distribution analyzer ("Microtrac MT3300EXII" manufactured by MicrotracBEL Corp.). D₅₀ is the particle size at which the cumulative volume is 50%, and this value was used as the average particle size.

### (X-Ray Diffraction)

A powder of a carbonaceous material or a carbonized product was filled in a sample holder, and X-ray diffraction measurement was conducted using "MiniFlex II" manufactured by Rigaku Corporation. On the basis of the obtained data, X-ray diffraction analysis was conducted, and Lₐ and L_{c} were calculated. CuKα (λ = 1.5418 Å) was used as a radiation source, and the scanning range was set to 10° < 20 < 90°.

### (Calculation of Carbon Interplanar Spacing d₀₀₂ Using Bragg's Equation by X-ray Diffraction Measurement)

Using "MiniFlex II" manufactured by Rigaku Corporation, the powders of the carbonaceous materials prepared in Examples and Comparative Examples described later were each filled in a sample holder, and an X-ray diffraction pattern was obtained using a CuKα ray monochromatized with a Ni filter as a radiation source. The peak position in the diffraction pattern was determined by the centroid method (a method of determining a barycentric position of a diffraction line and determining a peak position at a 20 value corresponding to the barycentric position), and the peak position was corrected using the diffraction peak of the (111) plane of a high-purity silicon powder for a standard substance. The wavelength λ of the CuKα ray was set to 1.5418 Å, and d₀₀₂ was calculated by the following Bragg's equation.
[Math 3]${d}_{002} = \frac{λ}{2 \cdot sin θ} \left(Bragg′s equation\right)$ (Bragg's equation)

### (Example 1)

### Step 1

8000 g of rice hulls were heated to a first temperature of 700°C in a batch atmosphere furnace under a nitrogen atmosphere. At this time, the rate of temperature raising to 700°C was adjusted to 200°C/hour (3.3°C/min). Next, a carbonization treatment was conducted by conducting a heat treatment at a low calcination temperature of 700°C for 60 minutes under a nitrogen gas flow, affording a carbonized product. At this time, the supply amount of nitrogen gas was 200 L/min. The resultant was cooled to 50°C under a nitrogen atmosphere, affording a target carbonized product.

### Pulverization

Next, the obtained carbonized product was pulverized with a ball mill, affording a pulverized carbonized product having an average particle size D₅₀ = 7 µm.

### Acid Washing

A 3 L three-necked flask was fitted with a cooling tube, a thermometer, and a stirrer. 0.6 L of 1 N hydrochloric acid was added to 100 g of the obtained pulverized carbonized product, and acid washing was conducted twice at 80°C for 2 hours. After cooling to room temperature, liquid removal was conducted with a Nutsche filter, and subsequently deacidification washing was conducted with 2 L of ion-exchanged water. Next, the resulting pulverized carbonized product was dried in a hot air dryer at 100°C for 3 hours.

### Step 2

15 g of the pulverized carbonized product was heated at 900°C in a tubular furnace. At this time, the rate of temperature raising up to 900°C was adjusted to 600°C/hour (10°C/min). Next, a high temperature calcination treatment was conducted by conducting a heat treatment at a high calcination temperature of 900°C for 30 minutes, affording a carbonized product. The temperature raising step of heating up to a prescribed temperature and the high temperature calcination treatment of conducting a heat treatment at 900°C for 30 minutes were conducted under a nitrogen gas flow. The supply amount of nitrogen gas was 0.1 L/min. The resultant was cooled to room temperature under a nitrogen atmosphere, affording a target carbonized product.

### Step 3

10 g of the carbonized product obtained in Step 2 was heated at 1300°C in a tubular furnace. At this time, the rate of temperature raising up to 1300°C was adjusted to 240°C/hour (4°C/min). Next, a high temperature calcination treatment was conducted by conducting a heat treatment at a high calcination temperature of 1300°C for 30 minutes, and the resultant was cooled to room temperature in a nitrogen atmosphere, affording a target carbonaceous material. The temperature raising step of heating up to a prescribed temperature and the high temperature calcination treatment of conducting a heat treatment at 1300°C for 30 minutes were conducted under a nitrogen gas flow. The supply amount of nitrogen gas was 2 L/min.

### (Example 2)

To 10 g of the carbonized product obtained in Step 2 of Example 1, 3 g of polystyrene was added, and the mixture was further heated at 900°C in a tubular furnace. At this time, the rate of temperature raising up to 900°C was adjusted to 600°C/hour (10°C/min). Next, a high temperature calcination treatment was conducted by conducting a heat treatment at a high calcination temperature of 900°C for 30 minutes, affording a carbonized product. The temperature raising step of heating up to a prescribed temperature and the high temperature calcination treatment of conducting a heat treatment at 900°C for 30 minutes were conducted under a nitrogen gas flow. The supply amount of nitrogen gas was 0.1 L/min. The resultant was cooled to room temperature under a nitrogen atmosphere, affording a target carbonized product. A carbonaceous material was obtained by conducting Step 3 in the same manner as in Example 1 except that the carbonized product obtained as described above was used.

### (Comparative Example 1)

The carbonized product obtained in Step 1 of Example 1 was directly heated at 1300°C under a nitrogen atmosphere, and the resulting carbonaceous material was pulverized, affording a target product. The step of heating at 1300°C under a nitrogen atmosphere was conducted under the same conditions as in Step 3 of Example 1.

### (Comparative Example 2)

The carbonized product obtained in Step 1 of Example 1 was pulverized and acid-washed in the same manner as in Example 1, affording a pulverized carbonized product. Next, the resulting pulverized carbonized product was directly heated at 1300°C under a nitrogen atmosphere, affording a target product. The step of heating at 1300°C under a nitrogen atmosphere was conducted under the same conditions as in Step 3 of Example 1.

### (Comparative Example 3)

A carbon material was obtained in the same manner as in Example 1 except that 0.6 L of a 1 N aqueous sodium hydroxide solution was used in place of 0.6 L of 1 N hydrochloric acid in the acid washing in Step 1, and dealkalization washing was conducted with 2 L of ion-exchanged water.

### (Preparation of Electrode)

A negative electrode was prepared in accordance with the following procedure using the carbonaceous material obtained in each of Examples and Comparative Examples.

95 parts by mass of the carbonaceous material, 2 parts by mass of conductive carbon black ("Super-P (registered trademark)" manufactured by TIMCAL), 1 part by mass of CMC, 2 parts by mass of SBR, and 90 parts by mass of water were mixed to afford a slurry. The resulting slurry was applied to a copper foil having a thickness of 18 µm, dried, and then pressed, affording an electrode having a thickness of 45 µm. The densities of the obtained electrodes were as shown in Table 2.

### (Initial Battery Capacity and Charge/Discharge Efficiency)

The electrode prepared above was used as a working electrode, and metal lithium was used as a counter electrode and a reference electrode. Ethylene carbonate, dimethyl carbonate, and ethyl methyl carbonate were mixed at a volume ratio of 1 : 1 : 1, and the mixture was used as a solvent. In this solvent was dissolved 1 mol/L of LiPF₆, and the resulting solution was used as an electrolyte. A polypropylene film was used as a separator. A coin cell was fabricated in a glove box under an argon atmosphere.

After measurement of the direct current resistance value before initial charge, a charge-discharge tests of the lithium secondary battery having the configuration described above was conducted using a charge-discharge tester ("TOSCAT" manufactured by Toyo System Co., Ltd.). Lithium doping was conducted at a rate of 70 mA/g with respect to the mass of the active material. The doping was conducted until the potential reached 1 mV relative to the lithium potential. A constant voltage of 1 mV relative to the lithium potential was further applied for 8 hours, and then the doping was terminated. The capacity (mAh/g) at this time was taken as the charge capacity. Then, dedoping was conducted at a rate of 70 mA/g with respect to the mass of the active material until 2.5 V relative to the lithium potential was achieved, and the capacity at this time was taken as the discharge capacity. The percentage of discharge capacity/charge capacity was defined as the charge/discharge efficiency (initial charge/discharge efficiency), which was used as an index of use efficiency of lithium ions in the battery.

The calcination conditions and the evaluation results of the physical properties of the carbonaceous material obtained in each of Examples and Comparative Examples are shown in Table 1. Further, the evaluation results of the battery characteristics are shown in Table 2. The carbonaceous materials obtained in Examples 1 to 2 were subjected to X-ray crystal diffraction measurement, and consequently any peak having a half width of 2° or less was not detected at 20 to 30° (2θ).

**[Table 1]**

| | Si element content [% by mass] | K element content [% by mass] | L_{c} [Å] | Lₐ [Å] | L_{c}/Lₐ | d₀₀₂ [Å] | Specific surface area [m²/g] | Average particle size D₅₀ [µm] |
|---|---|---|---|---|---|---|---|---|
| Example 1 | 13.2 | 0.04 | 9.98 | 6.24 | 1.60 | 3.83 | 16 | 7 |
| Example 2 | 13.2 | 0.04 | 10.01 | 6.02 | 1.66 | 3.84 | 9.6 | 7 |
| Comparative Example 1 | 12.2 | 0.76 | 9.62 | 10.08 | 0.95 | 3.78 | 10.2 | 7 |
| Comparative Example 2 | 12.1 | 0.04 | 10.11 | 12.45 | 0.81 | 3.75 | 8.9 | 7 |
| Comparative Example 3 | 4.2 | 0.02 | 12.2 | 14.3 | 0.85 | 3.84 | 6 | 7 |

**[Table 2]**

| | Electrode density [g/cm³] | Charge capacity [mA/g] | Discharge capacity [mA/g] | Efficiency [%] |
|---|---|---|---|---|
| Example 1 | 1.12 | 980 | 532 | 54.3 |
| Example 2 | 1.13 | 956 | 581 | 60.8 |
| Comparative Example 1 | 1.04 | 1712 | 602 | 35.5 |
| Comparative Example 2 | 1.06 | 1731 | 599 | 34.6 |
| Comparative Example 3 | 1.02 | 404 | 317 | 78.5 |

It was confirmed that the carbonaceous materials of Examples of the present application had a high discharge capacity and a high efficiency. On the other hand, the carbonaceous materials of Comparative Examples 1 and 2 had a high charge capacity, but a very low charge/discharge efficiency. When a carbonaceous material having a low charge/discharge efficiency like those shown in Comparative Examples 1 and 2 is used, for example, as an electrode, there may be a case where durability is not sufficient or a problem occurs in stability of a battery. In addition, it is considered that it is necessary to attain a high initial charge capacity in order to achieve a high discharge capacity, but it is not efficient in that it is necessary to excessively supply Li ions for consumption. The carbonaceous material of Comparative Example 3 had a high charge/discharge efficiency, but a very low charge/discharge capacity.

## Claims

1. A carbonaceous material having a silicon element content of 5% by mass or more, wherein
a value L_{c} representing a distance in a graphite stacking direction and a value Lₐ representing a distance in a graphite plane direction in X-ray diffraction analysis of the carbonaceous material satisfy 1 < L_{c}/Lₐ.

2. The carbonaceous material according to claim 1, wherein the value Lₐ representing a distance in the graphite plane direction is 4 to 12 Å.

3. The carbonaceous material according to claim 1 or 2, wherein the value L_{c} representing a distance in the graphite stacking direction and the value Lₐ representing a distance in the graphite plane direction satisfy 1 < L_{c}/Lₐ < 3.

4. The carbonaceous material according to any one of claims 1 to 3, wherein the carbonaceous material has a potassium element content of 0.2% by mass or less.

5. The carbonaceous material according to any one of claims 1 to 4, wherein a carbon interplanar spacing d₀₀₂ calculated using a Bragg's equation by wide-angle X-ray diffractometry is 3.75 Å or more.

6. The carbonaceous material according to any one of claims 1 to 5, wherein the carbonaceous material is a carbonaceous material derived from a gramineous plant.

7. A method for producing a carbonaceous material, comprising the steps of:
(1) heating a carbonized product precursor having a silicon element content of 3% by mass or more under an inert gas atmosphere at 300 to 900°C and then cooling a resultant to 200°C or lower to obtain a carbonized product;
(2) heating the carbonized product obtained in the step (1) under an inert gas atmosphere at 500 to 1000°C and then cooling a resultant to 200°C or lower to obtain a carbonized product; and
(3) heating the carbonized product obtained in the step (2) under an inert gas atmosphere at 800 to 1500°C and then cooling a resultant to 200°C or lower to obtain a carbonaceous material.

8. The production method according to claim 7, further comprising, between the step (1) and the step (2), a step of pulverizing the carbonized product obtained in the step (1) and a step of washing the carbonized product with an acid.

9. The production method according to claim 7 or 8, wherein the carbonaceous material has a silicon element content of 5% by mass or more, and
the value L_{c} representing a distance in the graphite stacking direction and the value Lₐ representing a distance in the graphite plane direction in X-ray diffraction analysis of the carbonaceous material satisfy 1 < L_{c}/Lₐ.

10. A negative electrode for a nonaqueous electrolyte battery, comprising the carbonaceous material according to any one of claims 1 to 5.

11. A nonaqueous electrolyte battery comprising the negative electrode according to claim 10.
